# FASCICULE DE BREVET EUROPEEN

(11) **EP 1 314 927 B1**
(45) Date de publication et mention de la délivrance du brevet: **28.12.2005**
(21) Numéro de dépôt: 02292476.5
(22) Date de dépôt: 08.10.2002
(51) Int. Cl.: F17C 7/02, B63J 5/00, F02M 37/10, F04B 23/02

(54) **Dispositif d'alimentation en gaz du système de propulsion d'un navire méthanier**
Gasversorgungsvorrichtung für den Antrieb eines Gastankers
Gas supply device for the propulsion unit of a gas tanker

(30) Priorité: 27.11.2001 FR 0115317
(43) Date de publication de la demande: 28.05.2003
(73) Titulaire: Alstom, 92300 Levallois-Perret (FR)
(72) Inventeur: Courtay, Roger, 44410 Herbignac (FR)
(74) Mandataire: Le Faou, Daniel

(56) Documents cités:
- DE-A- 3 116 900
- DE-A- 19 843 318
- FR-A- 2 722 760
- US-A- 6 123 511

## Description

La présente invention concerne un navire méthanier comprenant au moins une cuve isolée thermiquement pour le stockage du gaz à l'état liquide sous basse température et à pression voisine de la pression atmosphérique.

Les navires méthaniers connus utilisent l'évaporation naturelle du gaz pour alimenter une chaudière de production de vapeur et assurer la propulsion par détente de la vapeur dans une turbine entraînant les hélices après un réducteur.

On peut envisager une propulsion à partir de moteurs électriques, FR 2 722 760 reflétant l'état de la technique le plus proche, alimentés par un alternateur entraîné par des moteurs thermiques ou des turbines à gaz fonctionnant avec le gaz de la cuve.

Pour assurer le bon fonctionnement permanent de l'installation électrique, il est impératif que l'alimentation en gaz des moteurs ou des turbines soit ininterrompue quel que soit le niveau de gaz dans les cuves du navire.

Lorsque les cuves du navire sont pleines, il n'y a pas de difficulté mais, lorsque le navire a déchargé sa cargaison, on doit envisager de ne conserver en fond de cuve que la quantité de gaz à l'état liquide nécessaire au voyage de retour, ce qui pose des problèmes pour le pompage du gaz à l'état liquide, compte tenu des mouvements du navire dus au tangage et au roulis en cours de navigation.

Une solution possible serait de réaliser un puisard dans l'isolation cryogénique de la cuve comme décrit dans DE 31 16 900, cependant ceci exigerait une surépaisseur d'isolation de tout le fond de cuve d'une épaisseur égale à la profondeur du puisard de façon à conserver sous le puisard 'épaisseur minimale d'isolation requise. Une telle solution est onéreuse et diminue d'autant le volume de la cargaison transportée.

La présente invention a pour but de résoudre ce problème et permettre ainsi aux méthaniers d'avoir une installation de production d'énergie électrique pour tous les besoins électriques, y compris la propulsion, à partir d'un alternateur entraîné par des moteurs thermiques ou des turbines à gaz alimentés par le gaz de la cargaison.

L'invention a ainsi pour objet un navire méthanier comprenant au moins une cuve isolée thermiquement pour le stockage du gaz à l'état liquide sous basse température et à pression voisine de la pression atmosphérique, caractérisé en ce qu'il comprend au moins un moteur thermique ou une turbine à gaz alimenté en gaz en provenance de ladite cuve au moyen d'une pompe placée en fond de cuve et après passage dans une unité de mise en phase gazeuse du gaz pompé à l'état liquide, ladite pompe étant entourée d'une enceinte de captation équipée de clapets anti-retour, apte à stocker un volume de gaz liquide et à maintenir l'aspiration de la pompe toujours immergée.

Selon une caractéristique particulière de l'invention, les clapets anti-retour laissent entrer du liquide dans l'enceinte de captation quand la hauteur du liquide à l'extérieur de ladite enceinte est supérieure à la hauteur de liquide à l'intérieur de ladite enceinte.

Selon une caractéristique particulière de l'invention, l'enceinte de captation a la forme générale d'une cloche présentant une paroi latérale dont la partie supérieure est percée d'évents et comportant un fond en forme d'assiette creuse, la pompe aspirant au centre et les clapets étant sur le rebord.

On va maintenant donner la description d'un exemple de mise en oeuvre de l'invention en se référant au dessin annexé dans lequel :
La fig. 1 est un schéma montrant schématiquement l'installation générale de production d'électricité d'un navire méthanier à partir du gaz des cuves alimentant des moteurs thermiques et entraînant des alternateurs.
Les fig. 2, 3 et 4 montrent le détail II de la fig. 1.

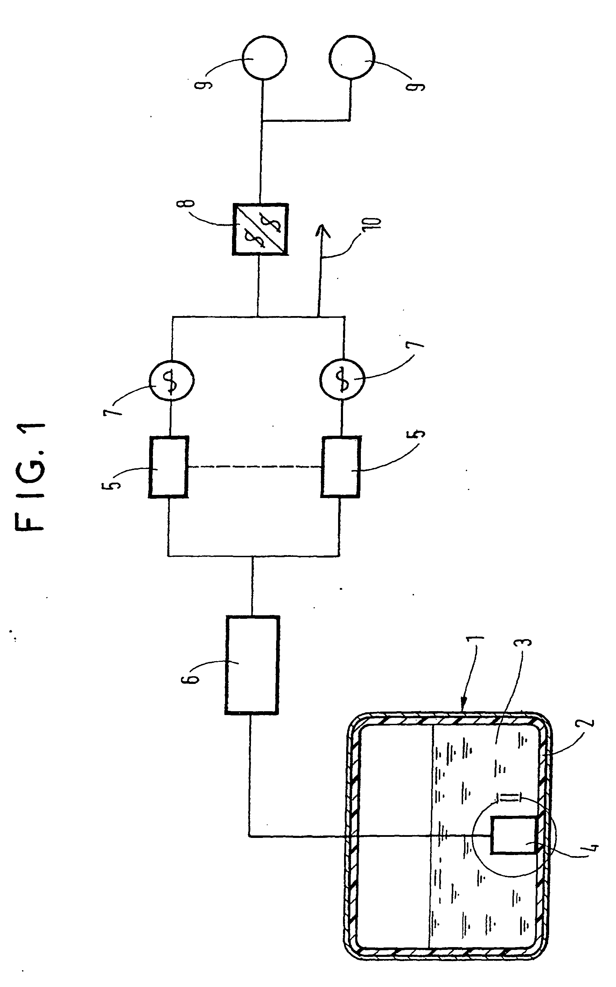

En se reportant à la fig. 1, on voit ainsi schématiquement une installation de production d'électricité pour les besoins électriques généraux et pour la propulsion d'un navire de transport de gaz liquéfié tel qu'un méthanier.

En 1 est figurée une cuve du navire comportant une isolation 2 et contenant le méthane 3 à l'état liquide à -163°C et pratiquement à la pression atmosphérique ambiante.

Une pompe 4 en fond de cuve alimente des moteurs thermiques 5 après passage du gaz à l'état liquide dans une unité 6 comprenant un évaporateur et un compresseur de façon à alimenter les moteurs 5 en phase gazeuse et à pression convenable. Ces moteurs 5 pourraient être remplacés par des turbines à gaz.

Les moteurs 5 entraînent chacun un alternateur 7 d'où une ligne 10 pourvoit aux besoins électriques du navire. Par ailleurs, les alternateurs sont reliés à un convertisseur de fréquence 8 dont la sortie alimente les moteurs de propulsion 9.

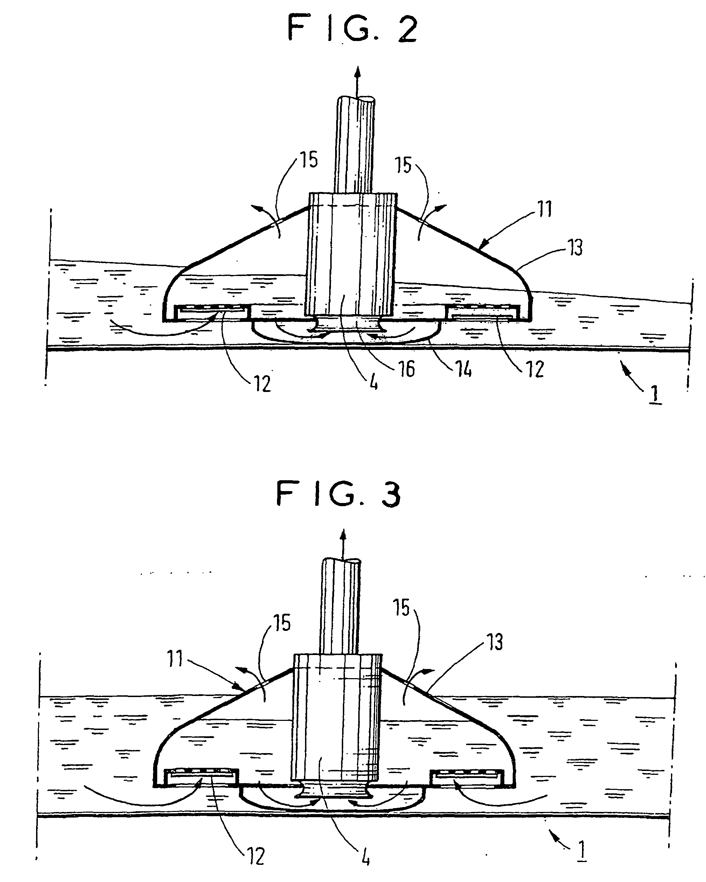

Les fig. 2, 3 et 4 sont trois figures montrant le même détail II de la fig. 1, c'est-à-dire la pompe 4, mais dans trois conditions de fonctionnement différentes.

Sur ces figures, on voit une pompe 4, du type pompe centrifuge, mais qui est équipée d'une enceinte de captation 11 qui entoure la pompe et qui comprend des clapets anti-retour 12, par exemple au nombre de quatre.

Cette enceinte de captation 11 a la forme générale d'une cloche présentant une paroi latérale 13 et un fond 14 en forme générale d'assiette creuse, les clapets étant situés sur le rebord et la pompe aspirant au centre de "l'assiette". La paroi latérale 13 est percée d'évents 15 à sa partie supérieure.

La pompe est placée au centre de la cuve.

Ainsi, grâce à cette disposition, aspiration de la pompe est toujours immergée, même lorsque la cuve est peu remplie et le navire soumis aux mouvements de roulis et de tangage.

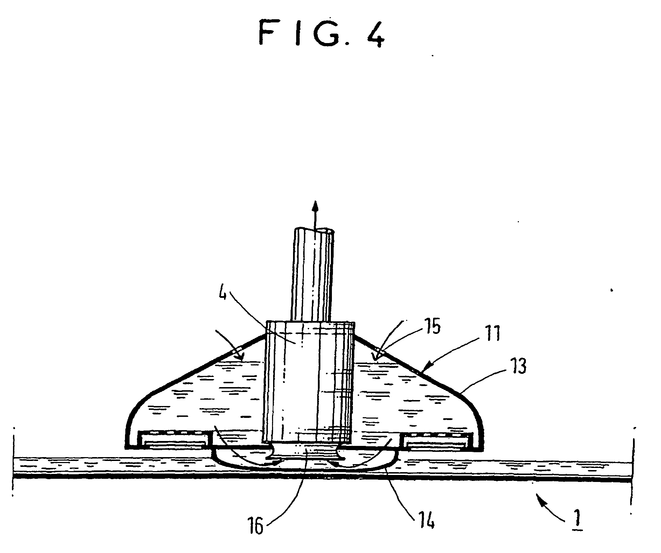

La fig. 2 montre une arrivée de vague de la gauche vers la droite avec un niveau de liquide hors enceinte 11 qui commence à être supérieur au niveau à l'intérieur et provoquant donc l'ouverture des clapets 12 et le remplissage de l'enceinte, les évents 15 permettant la sortie des gaz. Sur la fig. 3, on est au plus haut de la vague et le remplissage se poursuit tandis que sur la fig. 4, la vague s'étant retirée, les clapets 12 se sont fermés dès que le niveau externe du gaz liquide devient inférieur à celui à l'intérieur de l'enceinte de captation 13 (à la perte de charge près des clapets qui peut être très faible).

Le positionnement de la pompe au centre de la cuve lui permet d'être régulièrement immergée au cours des mouvements du navire, l'enceinte de captation 13 est donc toujours alimentée et la pompe 4 a toujours son aspiration 16 immergée.

Le dispositif est dimensionné de façon à ce que le volume de gaz à l'état liquide stocké dans l'enceinte de captation soit suffisant pour que le niveau minimal dans l'enceinte reste suffisant pour éviter le désamorçage de la pompe entre deux vagues successives.

## Revendications

1. Navire méthanier comprenant au moins une cuve (1) isolée thermiquement (2) pour le stockage du gaz (3) à l'état liquide sous basse température et à pression voisine de la pression atmosphérique, comprenant au moins un moteur thermique ou une turbine à gaz (5) alimenté en gaz en provenance de ladite cuve (1) au moyen d'une pompe (4) placée en fond de cuve et après passage dans une unité (6) de mise en phase gazeuse du gaz pompé à l'état liquide, ladite pompe étant entourée d'une enceinte de captation (11) équipée de clapets anti-retour (12), ***caractérisé* en ce *que*** ladite enceinte (11) est percée d'évents (15) et qu'elle est apte à stocker un volume de gaz liquide et à maintenir l'aspiration de la pompe toujours immergée.

2. Navire selon la revendication précédente, **caractérisée en ce que** les clapets (12) laissent entrer du liquide dans l'enceinte de captation (11) quand la hauteur de liquide à l'extérieur est supérieure à la hauteur de liquide à l'intérieur de ladite enceinte.

3. Navire selon la revendication 1, **caractérisé en ce que** ladite enceinte de captation (11) a la forme générale d'une cloche présentant une paroi latérale (13) dont la partie supérieure est percée d'évents (15) et comportant un fond (14) en forme d'assiette creuse, la pompe (4) aspirant au centre et les clapets (12) étant sur le rebord.

## Patentansprüche

1. Gastanker, der wenigstens einen wärmeisolierten (2) Tank (1) zur Speicherung von Gas (3) im flüssigen Zustand bei niedriger Temperatur und bei einem Druck in der Nähe des Luftdrucks umfaßt, der wenigstens einen Verbrennungsmotor oder eine Gasturbine (5) umfaßt, der oder die mit Gas aus dem Behälter (1) mittels einer Pumpe (4), die am Behälterboden angeordnet ist, und nach dem Durchlaufen einer Einheit (6) zur Versetzung des im flüssigen Zustand gepumpten Gases in die gasförmige Phase versorgt wird, wobei die Pumpe von einer mit Rückschlagventilen (12) ausgestatteten Aufnahmekammer (11) umgeben ist, **dadurch gekennzeichnet, daß** die Kammer (11) von Lüftungsöffnungen (15) durchlöchert ist und daß sie dafür eingerichtet ist, ein Volumen an flüssigem Gas zu speichern und das Ansaugen der stets eingetauchten Pumpe aufrechtzuerhalten.

2. Gastanker nach dem vorhergehenden Anspruch, **dadurch gekennzeichnet, daß** die Ventile (12) Flüssigkeit in die Aufnahmekammer (11) eintreten lassen, wenn der äußere Flüssigkeitsstand höher ist als der Flüssigkeitsstand im Inneren der Kammer.

3. Gastanker nach Anspruch 1, **dadurch gekennzeichnet, daß** die Aufnahmekammer (11) die allgemeine Form einer Glocke hat, mit einer Seitenwand (13), deren oberer Teil von den Lüftungsöffnungen (15) durchlöchert ist, und die einen Boden (14) in der Form eines hohlen Tellers umfaßt, wobei die Pumpe (4) in der Mitte ansaugt und die Ventile (12) sich am Rand befinden.

## Claims

1. A methane tanker including at least a tank (1) with thermal insulation (2) for storing liquid gas (3) at a low temperature and at a pressure close to atmospheric pressure, including at least an internal combustion engine or gas turbine (5) supplied with gas from said tank (1) by a pump (4) located at the bottom of the tank and via a unit (6) for converting to the gas state the gas pumped in the liquid state, said pump being surrounded by a capture enclosure (13) equipped with check valves (12), **characterized in that** said enclosure (11) is pierced with vents (15) and is suitable to store a volume of liquid gas and to keep the pump inlet always immersed.

2. A tanker according to precedent claim, **characterized in that** said valves (12) allow liquid to enter into the capture enclosure (11) when the liquid level outside is higher that the liquid level inside said enclosure (11).

3. A tanker according to claim 1, **characterized in that** said capture enclosure (11) is generally bell-shaped with a lateral wall (13) with vents (15) through its top part and a dish-shaped bottom (14), the inlet of the pump (4) being at the center of the dish and the valves (12) being on its rim.
